(19) Europäisches Patentamt
European Patent Office
Office européen des brevets

(11) **EP 4 425 236 A1**

(12) **EUROPEAN PATENT APPLICATION**

(43) Date of publication:
**04.09.2024 Bulletin 2024/36**

(21) Application number: **24160532.8**

(22) Date of filing: **29.02.2024**

(51) International Patent Classification (IPC):
**G02B 27/00** (2006.01)     **G02B 27/01** (2006.01)
**G02B 3/08** (2006.01)

(52) Cooperative Patent Classification (CPC):
**G02B 27/0172; G02B 27/0093;** G02B 3/08;
G02B 2027/0138; G02B 2027/0178

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.03.2023 US 202363449235 P
02.03.2023 US 202363449482 P
30.01.2024 US 202418427089**

(71) Applicant: **Meta Platforms Technologies, LLC
Menlo Park, CA 94025 (US)**

(72) Inventors:
• **Zhang, Hao**
  **Menlo Park (US)**
• **Nakahara, Sho**
  **Menlo Park (US)**
• **Chancy, Carl**
  **Menlo Park (US)**
• **Odom, Garret**
  **Menlo Park (US)**
• **Pathak, Abhijeet R.**
  **Menlo Park (US)**

(74) Representative: **Murgitroyd & Company
165-169 Scotland Street
Glasgow G5 8PL (GB)**

(54) **WEARABLE DEVICE WITH A CORRECTIVE LENS HAVING A DIFFRACTIVE SURFACE**

(57)     According to examples, a wearable device may include a frame and a prescription lens mounted to the frame, in which the corrective lens may include a diffractive surface having features structured to have a certain correction level. The wearable device may also include at least one optical component mounted to the frame, the at least one optical component being positioned immediately adjacent to the corrective lens, in which the diffractive surface of the corrective lens causes the corrective lens to have a sufficiently thin edge to prevent the edge of the corrective lens from occluding the at least one optical component.

100

**FIG. 1**

EP 4 425 236 A1

**Description**

TECHNICAL FIELD

This patent application relates generally to wearable devices. Particularly, this patent application relates to wearable devices having corrective (e.g., prescription) lenses and optical components, such as eye tracking systems, in which the optical components are positioned immediately adjacent to the corrective lenses. The wearable devices may include smartglasses, head-mounted displays (HMDs), or the like. This patent application also relates generally to connecting pre-paired devices. Particularly, this patent application relates to pre-pairing devices through a wired connection with a computing apparatus such that the pre-paired devices may undergo a subsequent wireless connection to each other.

BACKGROUND

With recent advances in technology, prevalence and proliferation of content creation and delivery have increased greatly in recent years. In particular, interactive content such as virtual reality (VR) content, augmented reality (AR) content, mixed reality (MR) content, and content within and associated with a real and/or virtual environment (e.g., a "metaverse") has become appealing to consumers.

Wearable devices, such as a wearable eyewear, wearable headsets, head-mountable devices, and smartglasses, have gained in popularity as forms of wearable systems. In some examples, such as when the wearable devices are eyeglasses or smartglasses, the wearable devices may include transparent or tinted lenses. In some examples, the wearable devices may employ imaging components to capture image content, such as photographs and videos. In some examples, such as when the wearable devices are head-mountable devices or smartglasses, the wearable devices may employ a first projector and a second projector to direct light associated with a first image and a second image, respectively, through one or more intermediary optical components at each respective lens, to generate "binocular" vision for viewing by a user.

Many types of electronic devices communicate wirelessly with each other. These electronic devices include portable computing devices, wireless headsets, mobile phones, vehicles, set top boxes, digital media players, and other types of electronic devices. These electronic devices often undergo a pairing process in which two electronic devices may use an electronic handshake between the two electronic devices.

Two electronic devices may be paired with each other through the transfer of encryption keys between the electronic devices. For instance, one of the electronic devices may generate a random number and may send the generated random number to the other electronic device. The electronic devices may store each other's encryption keys and other information such that the paired electronic devices may automatically be connected to each other in the future.

SUMMARY

According to a first aspect, there is provided a wearable device, comprising: a frame; a corrective lens mounted to the frame, wherein the corrective lens includes a diffractive surface having features structured to have a certain correction level; and at least one optical component mounted to the frame, the at least one optical component being positioned immediately adjacent to the corrective lens, wherein the diffractive surface of the corrective lens causes the corrective lens to have a sufficiently thin edge to prevent the edge of the corrective lens from occluding the at least one optical component.

The diffractive surface may comprise a kinoform surface.

The diffractive surface may comprise an aspherical shaped kinoform surface to correct astigmatism in a user's eye.

The edge of the corrective lens may comprise a common thickness for features having structures designed for multiple levels of vision impairments.

The at least one optical component may comprise a camera configured to track movements of a user's eye when the user is wearing the wearable device.

The at least one optical component may comprise a light source configured to emit light onto a user's eye when the user is wearing the wearable device.

The camera and/or light source may form part of an eye tracking system. The eye tracking system may be partially provided on the wearable device and partially provided separate from the wearable device, for example as part of a computer system.

The at least one optical component may comprise an eye tracking system. The eye tracking system may include: a camera configured to track movements of a user's eye when the user is wearing the wearable device; and a light source configured to emit light onto the user's eye when the user is wearing the wearable device. The camera may be configured to capture images of the user's eye while the light is emitted onto the user's eye.

The wearable device may further comprise a display apparatus positioned adjacent to the corrective lens.

The display apparatus may be configured to display virtual reality, augmented reality, and/or mixed reality images.

The wearable device may further comprise a temple arm hingedly connected to the frame.

The diffractive surface may be provided on a first side of the prescription lens. The corrective lens may comprise a second feature on a second side of the corrective lens.

BRIEF DESCRIPTION OF DRAWINGS

Features of the present disclosure are illustrated by way of example and not limited in the following figures, in which like numerals indicate like elements. One skilled in the art will readily recognize from the following that alternative examples of the structures and methods illustrated in the figures can be employed without departing from the principles described herein.

Figure 1 illustrates a top view of a wearable device having optical components positioned immediately adjacent to lenses of the wearable device, according to an example.

Figure 2 illustrates a top view of a lens array and the optical components depicted in Figure 1, according to an example.

Figure 3 illustrates a side view of the optical component, in this case, an eye tracking system, and a lens assembly depicted in Figure 2, according to an example.

Figure 4 illustrates a perspective view of a wearable device, such as a near-eye display, in the form of a pair of smartglasses, glasses, or other similar eyewear, according to an example.

Figure 5 illustrates a perspective view of a wearable device, in this instance, a head-mounted display, that may include the lens assemblies and the optical components depicted in Figures 1 and 2, according to an example.

Figure 6 illustrates a block diagram of an environment in which a system, such as a computing apparatus, may pre-pair a first device with a second device such that the first device may readily connect with the second device at a later time, according to an example.

Figure 7 illustrates a block diagram of the system depicted in Figure 6, according to an example.

Figure 8 illustrates a flow diagram of a method for pre-pairing a first device with a second device to enable the first device to automatically connect with the second device at a later time, according to an example.

Figure 9 illustrates a block diagram of a computer-readable medium that has stored thereon computer-readable instructions for pre-pairing a first device with a second device to enable the first device to automatically connect with the second device at a later time, according to an example.

Figure 10 illustrates a flow diagram of a method that the first device may follow after the first device undergoes a factory reset and attempts to connect with the second device, according to an example.

DETAILED DESCRIPTION

For simplicity and illustrative purposes, the present application is described by referring mainly to examples thereof. In the following description, numerous specific details are set forth in order to provide a thorough understanding of the present application. It will be readily apparent, however, that the present application may be practiced without limitation to these specific details. In other instances, some methods and structures readily understood by one of ordinary skill in the art have not been described in detail so as not to unnecessarily obscure the present application. As used herein, the terms "a" and "an" are intended to denote at least one of a particular element, the term "includes" means includes but not limited to, the term "including" means including but not limited to, and the term "based on" means based at least in part on.

Some types of wearable devices may include eye tracking systems that may track various characteristics of a wearable device user's eye. For instance, the eye tracking systems may track the orientation and/or position of a user's eye. The eye tracking systems may also detect the location of the user's eye (e.g., the center of the eye), the torsion (e.g., the roll of the eye about the pupillary axis) of the eye, the shape of the eye, the current focal distance of the eye, the dilation of the pupil, other features of the eye's state, and/or the like.

The tracked orientation of the eye may be used to, e.g., determine an inter-pupillary distance (IPD) of the user, determine gaze direction, introduce depth cues (e.g., blur an image outside of the user's main line of sight), collect heuristics on the user interaction in the VR media (e.g., time spent on any particular subject, object, or frame as a function of exposed stimuli), some other function that is based in part on the orientation of at least one of the user's eyes, and/or the like. Determining a direction of a user's gaze may include determining a point of convergence based on the determined orientations of the user's left and right eyes. A point of convergence may be the point that the two foveal axes of the user's eyes intersect (or the nearest point between the two axes). The direction of the user's gaze may be the direction of a line through the point of convergence and through the point halfway between the pupils of the user's eyes.

Eye tracking systems may include one or more cameras for capturing video images of a user's face, and particularly, the user's eyes. The video images may be analyzed to track the various characteristics of the user's eyes. In some eye tracking systems, a camera may be positioned on a frame of the wearable device, close to the user's eye. For instance, the camera may be positioned immediately adjacent to a lens mounted on the frame of the wearable device in order to capture accurate video images of the user's eye. In addition, as the camera may be offset from a direct line of sight into the user's eye, the camera may be positioned at an angle with respect to the longitudinal axis of the lens.

In some instances, due to the close positioning and the angle of the camera, a portion of an edge of a lens may be sufficiently close to the camera to cause the portion of the edge to occlude or otherwise interfere with the field of view of the camera. This may result in the inaccurate tracking of a user's eye, which may lead to issues pertaining to the display of images and/or the tracking of information related to the user's eye movements. This issue may be exasperated in instances in which the edges of the lens are relatively thick, as may occur when the lens is a corrective (e.g., prescription) lens. That is, for instance, some corrective lenses, especially those for stronger prescription levels, may have concave structures in which the edges of the lenses may be substantially thicker than the centers of the edges.

The eye tracking systems may also include a light source to emit light onto the user's eye. The light emitted onto the eye may have an interference pattern that the camera may capture, which may be used to track the user's eye movements. The light source may also be positioned immediately adjacent to the lens and thus the portion of the lens edge may occlude or otherwise interfere with the light emitted from the light source.

Disclosed herein are wearable devices that may have a frame and a corrective lens mounted to the frame. The corrective lens may include a diffractive surface, e.g., a kinoform surface, that has features structured to have a certain correction (e.g., prescription) level. The features, e.g., prisms or other optical elements, may be shaped and positioned on the lens to cause light to be altered in a certain manner consistent with a certain prescription level. Thus, for instance, the vision of a user who may need the certain prescription level may be improved by looking through the corrective lens. The inclusion of the diffractive surface on the lens may enable the lens to have the certain prescription level without having a concave or convex shape with a relatively large edge.

The wearable devices disclosed herein may also have at least one optical component, such as an eye tracking system, that may include a camera to track movements of a user's eye. The at least one optical component may also include a light source to emit light onto or around the user's eye to enable the camera to capture video images of, for instance, an interference pattern, on a user's eye. The camera and/or the light source may include operational zones, e.g., field of view, area of illumination, and/or the like, that may be directed to the user's eye. The camera and/or the light source may be positioned as close to a front of the user's eye as possible to increase the accuracy at which the user's eye may be tracked. This may require that the camera and/or the light source be positioned immediately adjacent to the corrective lens. The camera and/or the light source may be considered as being positioned immediately adjacent to the corrective lens when the camera and/or the light source is positioned as close as possible to the edge of the corrective lens without the edge of the corrective lens occluding or otherwise interfering with the operations of the camera and/or the light source.

Through implementation of the features of the present disclosure, a wearable device may include both corrective lenses and optical components, such as eye tracking systems. In addition, the corrective lenses may have sufficiently thin edges to enable the eye tracking systems to be provided on a frame of the wearable device, immediately adjacent to the corrective lenses without the corrective lenses occluding or otherwise interering with the eye tracking systems.

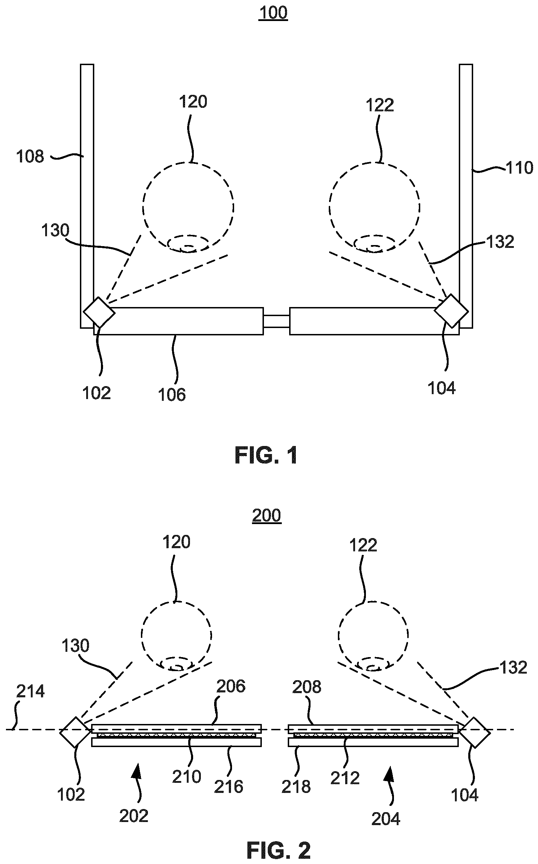

Reference is first made to Figures 1 and 2. Figure 1 illustrates a top view of a wearable device 100 having optical components 102, 104 positioned immediately adjacent to lenses of the wearable device 100, according to an example. Figure 2 illustrates a top view of a lens array 200 and the optical components 102, 104 depicted in Figure 1, according to an example. The wearable device 100 may be a wearable eyewear, a wearable headset, smartglasses, eyeglasses, and/or the like. The wearable device 100 may also include a frame 106 and a pair of temple arms 108, 110.

Blocks representing the optical components 102, 104 are shown in Figure 1 to illustrate representative locations at which the optical components 102, 104 may be positioned on the wearable device 100. In other examples, the optical components 102, 104 may be mounted within the frame 106, within the respective temple arms 108, 110, or in portions of both the frame 106 and the respective temple arms 108, 110 such that the optical components 102, 104 may not be visible from above the wearable device 100.

The optical components 102, 104 may include a camera to capture video images of a user's eyes 120, 122. In Figures 1 and 2, representations of the user's eyes 120, 122 are depicted to illustrate their respective positions with respect to the wearable device 100. As shown, when a user is wearing the wearable device 100 such that the user's eyes 120, 122 are positioned behind the frame 106, the eyes 120, 122 may be positioned within respective operating zones 130, 132 of the optical components 102, 104. The operating zones 130, 132 of the optical components 102, 104 may include the fields of view of the cameras of the optical components 102, 104. The operating zones 130, 132 may also include areas over which light sources of the optical components 102, 104 may emit light. In some examples, the optical components 102, 104 may be eye tracking systems, while in other examples, the optical components 102, 104 may include systems that may perform other types of operations in the wearable device 100.

Although not explicitly shown in Figure 1, the wearable device 100 may include the lens array 200 illustrated in Figure 2. Particularly, for instance, the lens array 200 may be housed within or otherwise supported by the frame 106, and thus, a top section of the frame 106 may cover the lens array 200. The lens array 200 may include a first lens assembly 202 and a second lens assembly 204. Each of the lens assemblies 202, 204 may include a respective lens 206, 208. According to examples, the lenses 206, 208 may be corrective (e.g., prescription) lenses that may alter the direction of light rays so that the light rays are directed correctly on a user's retina, allowing the user to see properly. In other words, the lenses 206, 208 may alter the direction of the light rays such that the lenses 206, 208 may improve or correct a user's vision, e.g., farsightedness, nearsightedness, or a combination thereof.

According to examples, the lenses 206, 208 may include diffractive surfaces 210, 212 having features structured to improve a vision of a user of the wearable device 100. The features may include an array of prisms having step heights that may be less than about 5 um. The array of prisms may cause the diffractive surfaces 210, 212 to have profiles that may be similar to a saw tooth.

According to examples, the diffractive surfaces 210, 212 may be kinoform surfaces, in which the features of the kinoform surfaces may be tuned to a certain correction (e.g., prescription) level. In this regard, the lenses 206, 208 may include kinoform surfaces having features structured for one of a plurality of different prescription levels or strengths, depending on the prescription level of a user of the wearable device 100. In some examples, the phase step height for the kinoform surface may be defined as:

$$\text{Equation 1: Wave number: } \frac{\lambda}{(n_1 - 1)} \Rightarrow \text{micrometers}$$

In Equation 1, $\lambda$ represents the wavelength of incident light and $n_1$ denotes the refractive index of the kinoform material. The power of the kinoform surface 210, 212 may be determined by the position and spacing of different zones on the kinoform surface, in which the different zones may correspond to the features, such as prisms, on the kinoform surface.

The lenses 206, 208 with the diffractive surfaces 210, 212 may be formed of any suitable material, including a polymer material, such as acrylic, optical glass, polystyrene, cyclic olefin copolymer (COC), amorphous polyolefin, or the like. In addition, the lenses 206, 208 may be manufactured through any suitable manufacturing process, such as, injection molding, three-dimensional printing, wet etching, dry etching, and/or the like.

In some examples, the diffractive surfaces 210, 212 may include aspherical shaped kinoform surfaces to correct astigmatism in the user's eye. For instance, the diffractive surfaces 210, 212 may include oval shapes that may create a sufficient cylinder power effect to correct astigmatism in the user's eye.

In some examples, additional features may be formed or otherwise provided on the sides of the lenses 206, 208 that are opposite the sides of the lenses 206, 208 on which the diffractive surfaces 210, 212 may be provided. In other words, the diffractive (kinoform) surfaces 210, 212 may be provided on first sides of the lenses 206, 208 and second features may be provided on second sides of the lenses 206, 208. According to examples, the second features may provide fine adjustments to the lenses 206, 208 to, for instance, fine tune the correction levels of the lenses 206, 208. The second features may provide the fine adjustments without, for instance, increasing the thicknesses of the edges of the lenses 206, 208.

As shown in Figure 2, the optical components 102, 104 may be positioned immediately adjacent to the respective lens assemblies 202, 204. The optical components 102, 104 may be considered as being positioned immediately adjacent to the respective lens assemblies 202, 204 when the optical components are positioned as close as possible to the respecive edges of the lens assemblies 202, 204 without the edges of the lenses 206, 208 occluding or otherwise interfering with the operations of the optical components. The optical components 102, 104 may be positioned in such close proximities to the lens assemblies 202, 204 in order for the optical components 102, 104 to, for instance, accurately track eye movements. In addition, or alternatively, the optical components 102, 104 may be positioned in close proximities to the lens assemblies 202, 204 due to physical configurations and/or limitations in the frame 106 and/or temple arms 108 of the wearable device 100.

The optical components 102, 104 may also be positioned such that the respective operating zones 130, 132 are angled with respect to the longitudinal axis 214 of the lenses 206, 208. The respective operating zones 130, 132 may be so angled to cause the respective operating zones 130, 132 of the optical components 102, 104 to respectively be directed toward the user's eyes 120, 122.

As shown in Figure 2, the close proximities of the optical components 102, 104 to the respective lenses 206, 208 and the angles at which the operating zones 130, 132 are directed with respect to the respective lenses 206, 208 may cause the operating zones 130, 132 to be relatively close to the outer edges of the lenses 206, 208. According to examples, the inclusion of the diffractive surfaces 210, 212 to provide correction levels may enable the thicknesses of the edges of the lenses 206, 208 to remain relatively thin. In addition, the edges may remain relatively thin even when the prescription level or strength of the lenses 206, 208 are increased. As a result, the edges of the lenses 206, 208 may not occlude or otherwise block the operating zones 130, 132 of the optical components 102, 104, even in instances in which the wearable device 100 includes lenses 206, 208 having relatively strong prescription levels. In some examples, the edges of the lenses 206, 208 may remain the same for lenses 206, 208 having one of multiple prescription levels.

According to examples, the lens assemblies 202, 204 may include a respective display apparatus 216, 218 that may be positioned adjacent to the lenses 206, 208. As shown in Figure 2, the display apparatuses 216, 218 may be positioned on the sides of the lenses 206, 208 that are opposite the sides through which a user is to look through the lenses 206, 208. The display apparatuses 216, 218 may display virtual reality, augmented reality, and/or mixed reality images to a user of the wearable device 100. The display apparatuses 216, 218 may include suitable elements to display the images, such as a liquid crystal display (LCD) display panel, a light-emitting diode (LED) display panel, or an optical display panel (e.g., a waveguide display assembly). In addition or in other examples, the display apparatuses 216, 218 may include optical waveguides that may include gratings through which the images may be displayed. The optical waveguides may also function to direct light emitted from the optical components 102, 104 onto the eyes 120, 122 for eye tracking.

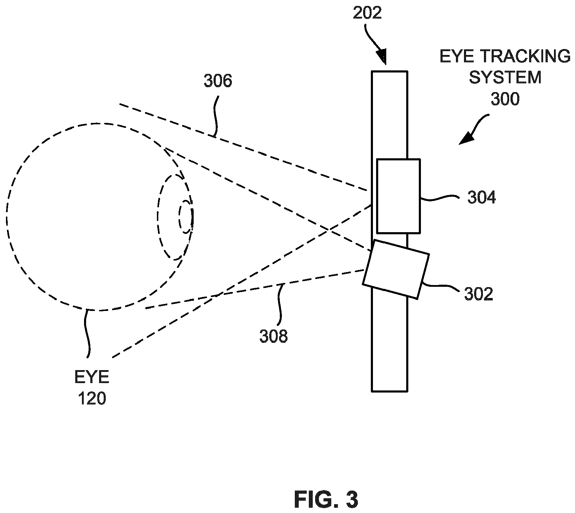

Figure 3 illustrates a side view of the optical component 102, in this case, an eye tracking system 300, and a lens assembly 202 depicted in Figure 2, according to an example. As shown, the eye tracking system 300 may include a camera 302 and a light source 304 that may be positioned vertically with respect to the lens assembly 202 to enable the operational zone 130 to be directed onto the eye 120. Particularly, the light source 304 may emit light 306 onto the user's eye 120 or to an area around the user's eye 120. In addition, the camera 302 may receive light 308 reflected from the user's eye 120 or an area around the user's eye 120.

In some instances, the light source 304 may emit the light directly onto the eye 120 or the area around the eye 120. In other instances, the light source 304 may direct the light 306 toward the display apparatus 216, which may include a waveguide, a lens, a prism, a mirror, and/or the like. In these instances, the display apparatus 216 may direct the light 306 onto the eye 120 or the area around the eye 120. In any of these instances, the light source 304 may be any suitable type of illumination source that may output light. According to examples, the light source 304 may output light 306 at any suitable wavelength that may not be harmful to the human eye. For example, the light source 304 may output light at a wavelength that is in the range from about 400 nm to about 1500 nm. In some examples, the wavelength at which the light source 304 outputs light 306 may be variable and/or the light source 304 may concurrently output light at multiple wavelengths. In some examples, the light source 304 may include a laser diode, e.g., a vertical-cavity surface-emitting laser (VCSEL), while in other examples, the light source 304 may include another type of illumination device such as a light emitting diode (LED), a narrowband LED, or the like. In some examples, the eye tracking system 300 may include multiple light sources 304.

In some examples, the light source 304 may output a structured light pattern, e.g., an interference pattern. In these examples, the light source 304 may include a structured light element, which may be defined as an optical element that when illuminated by, outputs the structured light pattern. The structured light element may be, e.g., an apodization and/or phase mask, a diffractive element, birefringent plate, some other optical element that when illuminated by the light source 304 outputs structured light, or some combination thereof. Additionally, in some examples, the light source 304 may be modulated in time, frequency, or both.

In the context of a single eye of a user, the structured light pattern may be incident upon the surface of a portion of the eye 120. The structured light pattern may be distorted based in part on, e.g., the geometry of the illuminated surface and emitter to camera geometry, to form a distorted illumination pattern. The variation in the distorted illumination pattern is indicative of the 3D structure of a portion of the surface of the eye 120. In some examples, the portion of the eye covers the sclera, the cornea, or both of the eye 120. In some examples, multiple structured light emitters may be employed to project structured light patterns onto the eye 120. In some examples, a first structured light emitter may project a first structured light pattern onto one of the user's eyes 120 and a second structured light emitter may project a second structured light pattern onto the other eye 122.

The camera 302 may detect the distorted light pattern on the portion of the eye 120 illuminated by the structured light emitter. The camera 302 may be an infrared camera (e.g., a camera designed to capture images in the infrared frequency). The camera 302 may be a near-infrared camera with digital image sensors sensitive to the bandwidth of light emitted by the light source 304. The camera 302 may include a charge coupled device (CCD), a complementary metal-oxide semiconductor (CMOS) digital image sensor and an optical element, or the like. The optical element may be one or more lenses, a high-pass, low-pass, or band-pass filter, a polarizer, an aperture stop, a diaphragm, some other optical element suitable for processing IR light, or some combination thereof. The optical element may output light that is captured and converted into a digital signal by the CCD or CMOS digital sensor.

The camera 302 may detect the distorted illumination pattern and may convert the captured light into a digital image. Multiple ones of the digital images may be analyzed to track eye 120 positions, movements, etc., as discussed herein.

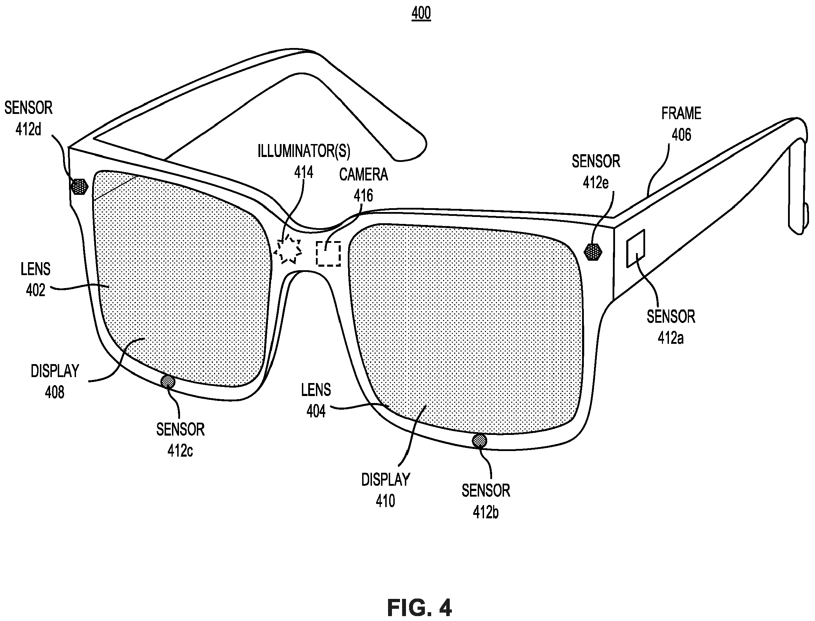

Figure 4 illustrates a perspective view of a wearable device 400, such as a near-eye display, in the form of a pair of smartglasses, glasses, or other similar eyewear, according to an example. In some examples, the wearable device 400 may be a specific implementation of the wearable device 100 of Figures 1 and 2, and may be configured to operate as a virtual reality display, an augmented reality display, and/or a mixed reality display. In some examples, the wearable device 400 may be eyewear, in which a user of the wearable device 400 may see through lenses 402, 404 in the wearable device 400. The lenses 402, 404 may be equivalent to the lenses 206, 208 discussed herein and may thus be corrective, e.g., prescription lenses, having respective diffractive surfaces 210, 212. The wearable device 400 may also include the optical components 102, 104 as discussed herein.

In some examples, the wearable device 400 may include a frame 406 and displays 408, 410. In some examples, the displays 408, 410, which may be equivalent to the display apparatuses 216, 218, may be configured to present media or other content to a user. In some examples, the displays 408, 410 may include display electronics and/or display optics, e.g., a liquid crystal display (LCD) display panel, a light-emitting diode (LED) display panel, or an optical display panel (e.g., a waveguide display assembly). In some examples, the displays 408, 410 may also include any number of optical components, such as waveguides, gratings, lenses, mirrors, etc.

In some examples, the wearable device 400 may further include various sensors 412a-412e on or within a frame 406. In some examples, the various sensors 412a-412e may include any number of depth sensors, motion sensors, position sensors, inertial sensors, and/or ambient light sensors, as shown. In some examples, the various sensors 412a-412e may include any number of image sensors configured to generate image data representing different fields of views in one or more different directions. In some examples, the various sensors 412a-412e may be used as input devices to control or influence the displayed content of the wearable device 400, and/or to provide an interactive virtual reality (VR), augmented reality (AR), and/or mixed reality (MR) experience to a user of the wearable device 400. In some examples, the various sensors 412a-412e may also be used for stereoscopic imaging or other similar application.

In some examples, the wearable device 400 may further include one or more illuminators 414 to project light into a physical environment. The projected light may be associated with different frequency bands (e.g., visible light, infra-red light, ultra-violet light, etc.), and may serve various purposes. In some examples, the one or more illuminator(s) 414 may be used as locators.

In some examples, the wearable device 400 may also include a camera 416 or other image capture unit. The camera 416 may capture images of the physical environment in the field of view of the camera 416. In some instances, the captured images may be processed, for example, by a virtual reality engine (not shown) to add virtual objects to the captured images or modify physical objects in the captured images, and the processed images may be displayed to the user by the displays 408, 410 for augmented reality (AR) and/or mixed reality (MR) applications.

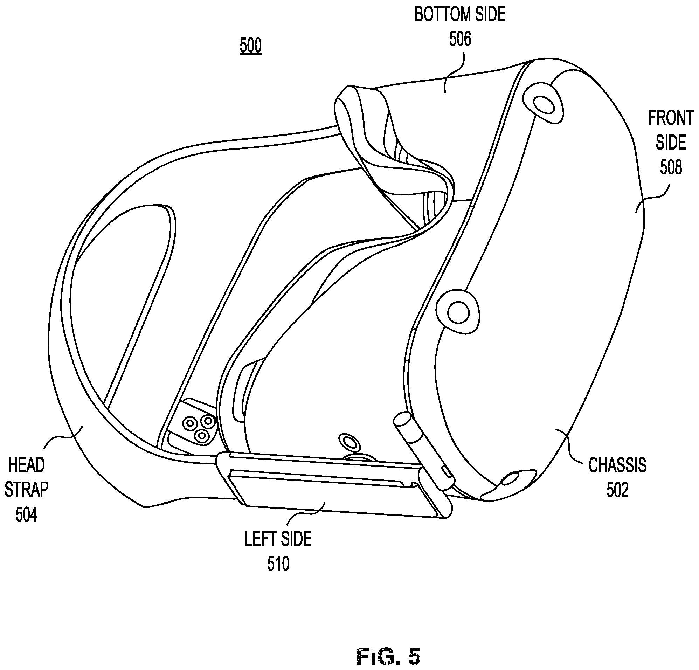

Figure 5 illustrates a perspective view of a wearable device 500, in this instance, a head-mounted display, that may include the lens assemblies 202, 204 and the optical components 102, 104 depicted in Figures 1 and 2, according to an example. Particularly, the wearable device 500 may include one or more the optical components 102, 104 positioned immediately adjacent to the corrective lenses 206, 208 as discussed herein.

In some examples, the wearable device 500 may be a part of a virtual reality (VR) system, an augmented reality (AR) system, a mixed reality (MR) system, another system that uses displays or wearables, or any combination thereof. In some examples, the wearable device 500 may include a chassis 502 and a head strap 504. Figure 5 shows a bottom side 506, a front side 508, and a left side 510 of the chassis 502 in the perspective view. In some examples, the head strap 504 may have an adjustable or extendible length. In particular, in some examples, there may be a sufficient space between the chassis 502 and the head strap 504 of the wearable device 500 for allowing a user to mount the wearable device 500 onto the user's head. In some examples, the wearable device 500 may include additional, fewer, and/or different components.

In some examples, the wearable device 500 may present, to a user, media or other digital content including virtual and/or augmented views of a physical, real-world environment with computer-generated elements. Examples of the media or digital content presented by the wearable device 500 may include images (e.g., two-dimensional (2D) or three-dimensional (3D) images), videos (e.g., 2D or 3D videos), audio, or any combination thereof. In some examples, the images and videos may be presented to each eye of a user by one or more display assemblies (not shown in Figure 5) enclosed in the chassis 502 of the wearable device 500.

Two electronic devices may wirelessly connect to each other to enable wireless communication of data between the electronic devices. The electronic devices may wirelessly connect to each other automatically when the electronic devices are paired to each other. That is, prior to wirelessly connecting to each other for the first time or after becoming unpaired from each other, the electronic devices may be paired with each other by undergoing, for instance, an electronic handshake operation during which the electronic devices exchange keys and information. The pairing may be, for instance, a Bluetooth™ or other type of wireless pairing.

Oftentimes, a user of either or both of the electronic devices initiates this process by pressing buttons or otherwise controlling the electronic devices to become paired with each other. In some instances, the pairing process may be initiated through the pressing of a single button to place one of the devices in an advertising mode. However, in some instances, the pressing of the single button may fail to result in the devices being paired. This may occur if the other device fails to receive or identify the advertising mode signal from the device and there is a timeout. When this occurs, the user may need to go through a pairing process that may require that the user perform a greater number of actions. An issue with this requirement may be that certain users, such as senior users, children, users with disabilities, non-technologically savvy users, etc., may be unable or may find it difficult to perform those actions. This may lead to the electronic devices being unable to be paired with each other and thus, dissatisfaction with the electronic devices. In many instances, this dissatisfaction may result in the users returning the electornic devices to retailers, distributors, or manufacturers of the electronic devices.

Ordinarily, manufacturers, programmers, or distributors of the electronic devices wipe out data stored on the electronic devices prior to the electronic devices reaching end users of the electronic devices. In other words, the electronic devices may undergo a factory reset operation prior to being sold or shipped to the end users. The factory reset operation may be performed as a final stage in the manufacture and programming of the electronic devices. As a result, even in instances in which the electronic devices were paired to each other during manufacture and programming, the information pertaining to the pairing may be erased from the electronic devices. The electronic devices may, therefore, not automatically connect to each other wirelessly when an end user activates the electronic devices for the first time.

Disclosed herein are systems, such as computing apparatuses, that may pre-pair a first device with a second device such that the first device and the second device may readily connect to each other wirelessly following a factory reset of either or both devices. As discussed herein, pairing information, such as bonding files and other files, that the first device and the second device may use to wirelessly connect to each other may be stored in permanent memory partitions of the first device and the second device prior to the data stores of the first device and the second device being factory reset or otherwise being erased. The data stored in the permanent memory partitions may not be erased during the factory reset operations. As discussed herein, the first and second devices may use the pairing information stored in the permanent memory partitions to later be wirelessly connected to each other.

The system that may pre-pair a first device with a second device first device may be located at a manufacturer, a programmer, a distributor, or the like, of the first device and the second device. Particularly, for instance, the first device and the second device may physically be linked, e.g., via wires or cables, to a system, and a processor of the system may cause the first device to be pre-paired with the second device. The pre-pairing may result in the storage of keys and other information in permanent memory partitions of the data stores in the first device and the second device. In addition, the first device and the second device may undergo factory reset operations prior to being delivered to an end user of the first and second devices. However, the keys and other information may remain stored in the permanent memory partitions of the first and second devices following the factory reset operations.

As a result, at a later time, the first device may readily or automatically be connected with the second device using the keys and the other information stored in the permanent memory partitions of the first device and the second device. This may also result in a reduction in the number of failed connection attempts and thus a greater level of satisfaction with the first and second devices.

According to examples, the processor may generate a sequence of characters that is to be used in pre-pairing of the first device and the second device. The processor may generate the sequence of characters to enable the pre-pairing of the first device and the second device through a simulated wireless pairing operation. That is, instead of performing a normal wireless pairing operation on the first device and the second device, the processor may simulate the wireless pairing with the first device and the second device while they are physically linked to the system through wires or cables. By simulating the wireless pairing through use of the sequence of characters, the processor may cause the first device and the second device to exchange information to be used to pre-pair the first device with the second device through the system. In addition, by simulating the wireless pairing through the wired connections, there may be less RF interference between the first device and the second device and thus, the pre-pairing of the first device with the second device may occur with increased reliability.

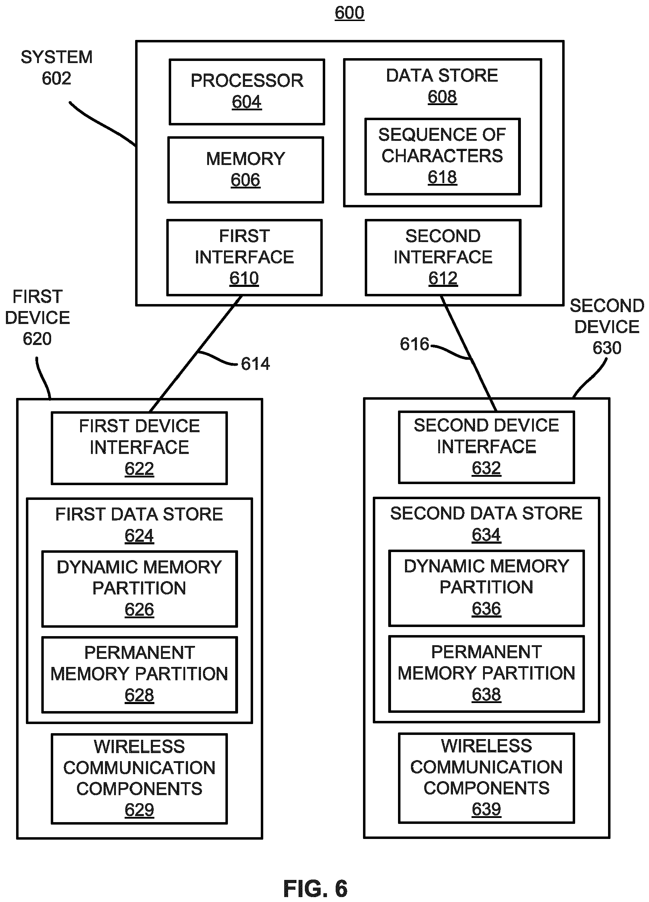

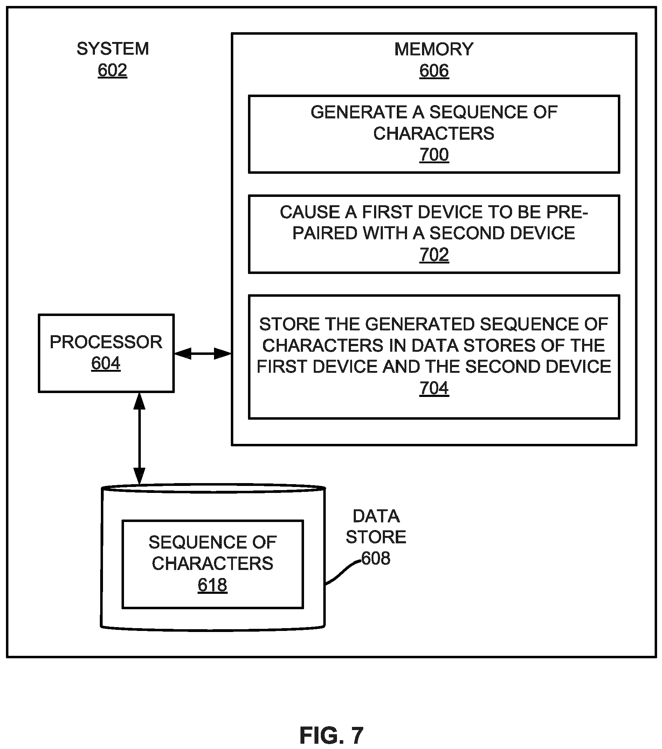

Reference is first made to Figures 6 and 7. Figure 6 illustrates a block diagram of an environment 600 in which a system 602, which may be a computing apparatus, may pre-pair a first device 620 with a second device 630 such that the first device 620 may readily connect with the second device 630 at a later time, according to an example. Figure 2 illustrates a block diagram of the system 602 depicted in Figure 6, according to an example.

In some examples, the environment 600 may be a testing environment, a manufacturing environment, a distribution environment, or the like. In this regard, the environment 600 may be a location at which the devices 620, 630 may be manufactured, programmed, tested, and/or the like. In addition, the system 602 may be employed in the environment 600 as a testing terminal, a programming terminal, and/or the like. By way of particular example, the system 602 may be or include a universal asynchronous receiver-transmitter (UART).

In some examples, the system 602 may be a computing device, such as a laptop computer, a desktop computer, a tablet computer, a smartphone, a server, a special purpose computer, or the like. As shown in Figures 6 and 7, the system 602 may include a processor 604, a memory 606 and a data store 608. The system 602 may also include additional components that are not described in detail herein. The processor 604 may control operations of the system 602 and may be a semiconductor-based microprocessor, a central processing unit (CPU), an application specific integrated circuit (ASIC), a field-programmable gate array (FPGA), and/or other hardware device. References made herein to the system 602 performing various operations may equivalently be construed as meaning that the processor 604 of the system 602 may perform those various operations.

The memory 606 may have stored thereon instructions that the processor 604 may access and/or may execute. In addition, the processor 604 may store and access various information in the data store 608 as discussed herein. The memory 606 and the data store 608 may each be a computer-readable medium, such as a Random Access memory (RAM), an Electrically Erasable Programmable Read-Only Memory (EEPROM), a storage device, or the like. The memory 606 and the data store 608 may each be a non-transitory computer-readable storage medium, where the term "non-transitory" does not encompass transitory propagating signals.

Although the system 602 is depicted as having a single processor 604, it should be understood that the system 602 may include additional processors and/or cores without departing from a scope of the system 602. In this regard, references to a single processor 604 as well as to a single memory 606 may be understood to additionally or alternatively pertain to multiple processors 604 and/or multiple memories 606. In addition, or alternatively, the processor 604 and the memory 606 may be integrated into a single component, e.g., an integrated circuit on which both the processor 604 and the memory 606 may be provided. In addition, or alternatively, the operations described herein as being performed by the processor 604 may be distributed across multiple processors 604.

As shown in Figure 6, the system 602 may also include a first interface 610 and a second interface 612. The first interface 610 and the second interface 612 may each be a hardware interface into which connectors at the ends of wires or cables 614, 616 may respectively be physically connected. In some examples, the first interface 610 and the second interface 612 may include features to enable conventional types of connectors to be connected to the interfaces 610, 612. In other examples, the first interface 610 and the second interface 612 may include custom types of connectors that may be employed to connect to the first device 620 and the second device 630 through the wires or cables 614, 616. In some examples, the second interface 612 may include a type of connector that differs from the first interface 610, while in other examples, the second interface 612 may include a same type of connector as the first interface 610.

As also shown in Figure 6, the first device 620 may include a first device interface 622 and the second device 630 may include a second device interface 632. The first device interface 622 may be similar to the first interface 610 and the second device interface 632 may be similar to the second interface 612. In addition, the first device 620 may be linked to the system 602 through a first wire or cable 614 via the first device interface 622 and the second device 630 may be linked to the system 602 through a second wire or cable 616 via the second device interface 632. The first device 620 and the second device 630 may be linked to the system 602 in order for the system 602 to perform one or more operations on the first device 620 and the second device 630. As discussed herein, an operation may include a pre-pairing of the first device 620 with the second device 630 through the wired connection with the system 602.

As also shown in Figure 7, the memory 606 may have stored thereon machine-readable instructions 700-704 that the processor 604 may execute. The machine-readable instructions 700-704 may be included in a script that the processor 604 may execute. The processor 604 may execute the instructions 700 to generate a sequence of characters 618 to be used in pre-pairing a first device 620 with a second device 630. The sequence of characters 618 may be a sequence of numbers, letters, symbols, or a combination of numbers, letter, and symbols. In some examples, the processor 604 may access information from the first device 620 and the second device 630, such as their media access code (MAC) addresses, and may generate the sequence of characters 618 from this information. For instance, the processor 604 may base the sequence of characters 618 from the information, such as by hashing the information. In other examples, the processor 604 may generate the sequence of characters 618 randomly. In any of these examples, the processor 604 may generate the sequence of characters 618 to be unique from other sequences of characters 618 that may have or that may be used for other pairs of devices.

In addition, the processor 604 may execute the instructions 702 to cause the first device 620 to be pre-paired with the second device 630. The pairing of the first device 620 with the second device 630 may be a pre-pairing because the first device 620 may become wirelessly connected with the second device 630 at a later time following removal of the links between the system and the first device 620 and the second device 630. That is, following the physical disconnection of the first device 620 and the second device 630 from the system 602, the first device 620 and the second device 630 may use the sequence of characters 618 stored in the first data store 624 and the second data store 134 to revive a pairing with each other and to wirelessly connect with each other automatically as discussed herein. The first device 620 and the second device 630 may be disconnected from the system 602 prior to removal of the first device 620 and the second device 630 from the environment 600. In addition, the first device 620 and the second device 630 may be wirelessly connected with each other following delivery of the first device 620 and the second device 630 to an end user, such as a consumer of the first device 620 and the second device 630.

According to examples, in order to cause the first device 620 to be pre-paired with the second device 630, the processor 604 may provide the sequence of characters 618 to the first device 620 and the second device 630. In addition, the first device 620 and the second device 630 may use the sequence of characters 618 to become paired with each other. For instance, the first device 620 and the second device 630 may simulate a Bluetooth™ pairing operation with each other using the sequence of characters 618. In other examples, the first device 620 and the second device 630 may simulate another type of pairing operation to occur through another type of wireless communication standard, such as wifi (IEEE 802.11, 802.15 and 802.16), Zigbee®, Wibree®, GPRS, and the like.

The first device 620 and the second device 630 may simulate a wireless pairing operation because normal wireless pairing operations generally entail the wireless exchange of information between two devices. Additionally, in standard wireless pairing, one or both of the devices normally include a random number generator (RNG) that generates a random number that the two devices use, for instance, as secret keys to become paired with each other. In the present disclosure, instead of one or both of the devices generating the random number, the processor 604 of the system 602 may generate the sequence of characters 618 that the first device 620 and the second device 630 may use to be pre-paired and later connected with each other. In addition, the first device 620 and the second device 630 may not communicate wirelessly with each other. Instead, the first device 620 and the second device 630 may exchange information with each other through the wired or cabled connections with the system 602.

By simulating the wireless connection between the first device 620 and the second device 630 to pre-pair the first device 620 with the second device 630 as discussed herein, some issues that may arise with wireless pairing may be avoided. For instance, in environments in which multiple devices are paired with other devices, wireless pairing may result in the unintended pairing of certain devices. As a result, in those environments, additional measures such as placement of the devices in isolation boxes may be required to reduce or prevent such unintended pairings. Additionally, wireless pairings may take a relatively long length of time and may be prone to failures, which may also increase the lengths of time consumed to complete the pairings. By simulating the wireless pairing between the first device 620 and the second device 630 through use of the wired connections as discussed herein, these issues may be avoided while still enabling the first device 620 and the second device 630 to readily become wirelessly connected with each other at a later time.

In some examples, the first device 620 and the second device 630 may provide information to the system 602 that the first device 620 and the second device 630 may use to identify each other at a future time after the first device 620 and the second device 630 are disconnected from each other. The information may include, for instance, the addresses (e.g., media access control (MAC) addresses), names, and profiles of the first device 620 and the second device 630. The first device 620 and the second device 630 may be disconnected from each other when at least one of the first and second devices 620, 630 is powered off, when there is sufficient level of interference to block communications between that the first device 620 and the second device 630, when a distance between the first device and the second device 630 exceeds a range at which communications between the first device 620 and the second device 630 may be maintained, etc.

The processor 604 may execute the instructions 704 to store the generated sequence of characters 618 in a first data store 624 of the first device 620 and a second data store 634 of the second device 630. The first data store 624 and the second data store 634 may each be a computer-readable medium, such as a Random Access memory (RAM), an Electrically Erasable Programmable Read-Only Memory (EEPROM), a storage device, or the like. The first device 620 may also store the information received from the second device 630, such as the address, the name, and the profile of the second device 630 in the first data store 624. Likewise, the second device 630 may store the information received from the first device 620, such as the address, the name, and the profile of the first device 620 in the second data store 634. As discussed herein, the first device 620 and the second device 630 may use the information about the other device and the sequence of characters 618 to automatically connect with each other after being disconnected. In some examples, the processor 604 may generate bonding files that include the sequence of characters and the information and may store the bonding files in the first and second data stores 624, 634.

According to examples, the first data store 624 may include a dynamic memory partition 626 and a permanent memory partition 628. The second data store 634 may also include a dynamic memory partition 636 and a permanent memory partition 638. The permanent memory partitions 628, 638 may differ from the dynamic memory partitions 626, 636 in that data stored in the permanent memory partitions 628, 638 may be maintained during an erasure of the first data store 624 and the second data store 634. The erasure of the first data store 624 may occur when, for instance, the first device 620 undergoes a factory reset operation, e.g., to restore the first device 620 to factory default settings. The erasure of the second data store 634 may occur during similar operations. During the factory reset operations, data stored in the dynamic memory partitions 626, 636 may be erased. In some instances, the first device 620 and the second device 630 may undergo factory reset operations prior to delivery of the first device 620 and the second device 630 to an end user.

According to examples, the processor 604 may store the generated sequence of characters 618 along with the information pertaining to the first device 620 and the second device 630 used to identify each other in a pairing operation in the permanent memory partitions 628, 638. As a result, the sequence of characters 618 and the pairing information may remain stored in the first and second data stores 624, 634 following factory reset operations of the first device 620 and the second device 630.

In some examples, prior to storing the generated sequence of characters 618 in the first and second permanent memory partitions 628, 638, the processor 604 may determine whether an attempt to cause the first device 620 to be pre-paired with the second device 630 was successful. In other words, the processor 604 may validate whether the pre-pairing of the first device 620 with the second device 630 was successful. The processor 604 may determine that the pre-pairing was successful if the first device 620 is able to wirelessly connect with the second device 630. Based on a determination that the pre-pairing was successful, the processor 604 may store a bonding file that includes the generated sequence of characters 618 in the first permanent memory partition 628 and the second permanent memory partition 138.

In some examples, the processor 604 may generate the first bonding file, which may include the sequence of characters 618 and identification information of the second device 630. The identification information of the second device 630 may include the address, the name, and the profile of the second device 630. The processor 604 may also generate a second bonding file that may include the sequence of characters 618 and identification information of the first device 620. The identification information of the first device 620 may include the address, the name, and the profile of the first device 620. The processor 604 may store the first bonding file in the first data store 624 and may store the second bonding file in the second data store 634.

The processor 604 may perform at least one further attempt to cause the first device 620 to be pre-paired with the second device 630. In some examples, the processor 604 may cause a message indicating that the pre-pairing was unsuccessful to be displayed. The message may include suggested mitigation steps for an operator of the system 602 to follow. For instance, if the wired connection to the first device 620 or the second device 630 and the system 602 is weak or is disconnected, the processor 604 may cause a suggestion for the user to check the wired connections to be displayed on a display. As another example, the processor 604 may detect whether the first device 620 is online through, for instance, a debug bridge communication. If the first device 620 does not respond immediately, the processor 604 may wait for some period of time in case, for instance, the first device 620 is booting up. If the first device 620 does not respond after the period of time, the processor 604 may cause an instruction for the user to determine and correct a connection issue associated with the first device 620.

The processor 604 may perform the pre-pairing attempt again following performance of one or more mitigation steps. In instances in which the attempts continue to fail, e.g., beyond a predefined number of attempts, the processor 604 may output an indication that the first device 620 has failed to pre-pair with the second device 630. The predefined number of attempts may be user-defined, based on historical data, or the like. In addition, the attempt to pre-pair the first device 620 with the second device 630 may be ceased.

According to examples, following the storage of the sequence of characters in the first permanent memory partition 628 and the second permanent memory partition 638, the first device 620 may be disconnected from the second device 630. The first device 620 may be disconnected from the second device 630 following operations performed by the processor 604 as discussed herein, for instance, at another station. In other words, the first device 620 may undergo a factory reset operation at the other station, which may cause the first device 620 to lose the bonding file stored in the first dynamic memory partition 626. The second device 630 may also undergo a factory reset operation, which may cause the second device 630 to lose the bonding file stored in the second dynamic memory partition 636.

In addition, following erasure of the data in the first and second dynamic memory partitions 626, 636, the sequence of characters 618, e.g., the bonding files, may remain stored in the first and second permanent memory partitions 628, 638. As a result, the first device 620 and the second device 630 may use the sequence of characters 618 to be wirelessly connected with each other at a later time, such as through communication of information through respective wireless communication components 629, 639 in the first device 620 and the second device 630. The wireless communication components 629, 639 may include hardware, such as antennas, through which wireless signals may be transmitted and received. For instance, the wireless communication components 629, 639 may include Bluetooth™ antennas.

The first device 620 and the second device 630 may be any combination of devices that may be paired with each other via a short-range wireless communication protocol, such as Bluetooth™, or other wireless communication protocol. For instance, the first device 620 may be a main device and the second device 630 may be a companion device. By way of particular example, the first device 620 may be a digital media player, a video conferencing system, or the like, and the second device 630 may be a remote control or a control panel that is to be paired to the first device 620. As another example, the first device 620 may be a headset, such as an augmented reality and/or an artificial reality headset, and the second device 630 may be a controller of the headset. As a yet further example, the first device 620 may be a gaming system and the second device 630 may be a controller. As a yet further example, the first device 620 may be a smartphone or a tablet computer and the second device 630 may be headphones or ear buds that are to be paired with the first device 620. As a yet further example, the first device 620 may be a television and the second device 630 may be a remote control that is to be paired with the first device 620.

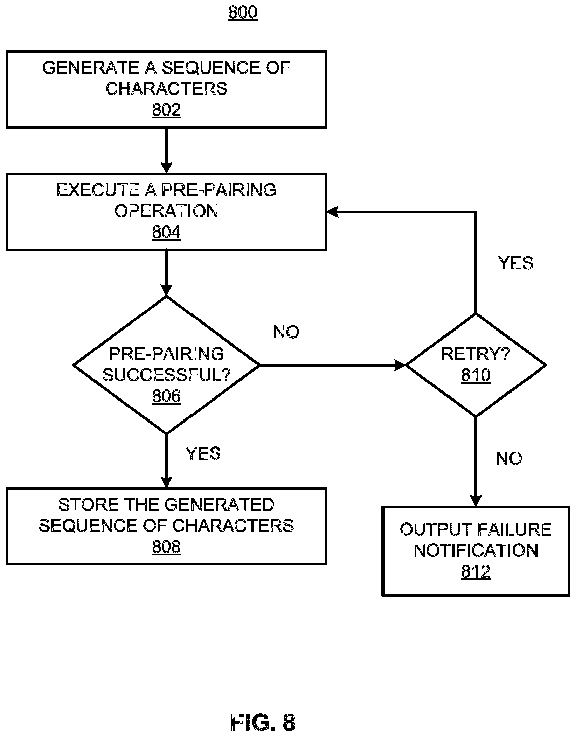

Various manners in which the processor 604 of the system 602 may operate are discussed in greater detail with respect to the method 800 depicted in Figure 8. Figure 8 illustrates a flow diagram of a method 800 for pre-pairing a first device 620 with a second device 630 to enable the first device 620 to automatically connect with the second device 630 at a later time, according to an example. It should be understood that the method 800 depicted in Figure 8 may include additional operations and that some of the operations described herein may be removed and/or modified without departing from the scope of the method 800. The description of the method 800 is made with reference to the features depicted in Figures 6 and 7 for purposes of illustration.

At block 802, the processor 604 may generate a sequence of characters 618 to be used in pre-pairing a first device 620 with a second device 630. As discussed herein, the system 602 may communicate with the first device 620 through a first wire or cable 614 and the second device 630 through a second wire or cable 616. The processor 604 may generate the sequence of characters 618 as a random set of characters, based on information obtained from the first device 620 and/or the second device 630, based on other data, and/or the like.

At block 804, the processor 604 may execute a pre-pairing operation using the generated sequence of characters 618 to pre-pair the first device 620 with the second device 630. As discussed herein, the first device 620 may be pre-paired with the second device 630 to enable the first device 620 to automatically and readily connect with the second device 630 at a later time. As also discussed herein, the first device 620 may include a first data store 624 and the second device 630 may include a second data store 634.

According to examples, the processor 604 may execute the pre-pairing operation while the first device 620 and the second device 630 are in wired communication with the system 602. Particularly, the processor 604 may simulate a wireless pairing of the first device 620 with the second device 630 through the respective wired connections 614, 616. By simulating the wireless pairing, the first device 620 and the second device 630 may communicate information to the system 602 that the first device 620 and the second device 630 would normally communicate during a wireless pairing operation, such as during a Bluetooth™ pairing operation. This may include the communication of information such as the names, addresses, and profiles of the devices 620, 630, such that the devices 620, 630 may identify each other when they undergo a later wireless connection operation.

At block 806, the processor 604 may determine whether the execution of the pre-pairing operation to pre-pair the first device 620 with the second device 630 was successful. The processor 604 may determine that the pre-pairing operation was successful based on the pairing being validated. The processor 604 may determine whether the pairing is validated based on whether the first device 620 and the second device 630 wirelessly connected to each other, e.g., whether wireless communication of information between the first device 620 and the second device 630 was successful.

At block 808, based on a determination that the pre-pairing was successful at block 806, the processor 604 may store the generated sequence of characters 618 in the first permanent memory partition 628 of the first device 620. The processor 604 may also store the generated sequence of characters 618 in the second permanent memory partition 638 of the second device 630. The processor 604 may also store information, such as the name, address, and profile of the first device 620 in the second permanent memory partition 638 and may store information of the second device 630 in the first permanent memory partition 628.

Following storage of the sequence of characters 618 in the first data store 624 and the second data store 634, the first device 620 may be disconnected from the second device 630 as discussed herein. In addition, data in the dynamic memory partitions 626, 636 of the first and second data stores 624, 634 may be erased.

Based, however, on a determination at block 806 that the pre-paring was not successful, at block 810, the processor 604 may determine whether to retry the pre-pairing operation. For instance, the processor 604 may determine whether a predefined number of attempts have been performed. Based on a determination that a predefined number of attempts have been performed, at block 812, the processor 604 may output a failure notification. The failure notification may include instructions on how to mitigate the failure and the pre-pairing operation may be performed again. However, based on a determination that the predefined number of attempts has not been performed, the processor 604 may execute the pre-pairing operation again at block 804. The processor 604 may execute the pre-pairing operation again at block 804 following implementation of a mitigation operation, for instance, ensuring that the first device 620 and the second device 630 are correctly connected to the system 602.

Some or all of the operations set forth in the method 800 may be included as utilities, programs, or subprograms, in any desired computer accessible medium. In addition, the method 800 may be embodied by computer programs, which may exist in a variety of forms both active and inactive. For example, they may exist as machine-readable instructions, including source code, object code, executable code or other formats. Any of the above may be embodied on a non-transitory computer readable storage medium.

Examples of non-transitory computer readable storage media include computer system RAM, ROM, EPROM, EEPROM, and magnetic or optical disks or tapes. It is therefore to be understood that any electronic device capable of executing the above-described functions may perform those functions enumerated above.

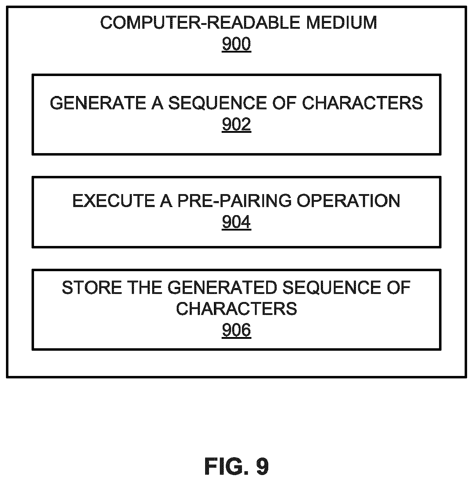

Turning now to Figure 9, there is illustrated a block diagram of a computer-readable medium 900 that has stored thereon computer-readable instructions for pre-pairing a first device 620 with a second device 630 to enable the first device 620 to automatically connect with the second device 630 at a later time, according to an example. It should be understood that the computer-readable medium 900 depicted in Figure 9 may include additional instructions and that some of the instructions described herein may be removed and/or modified without departing from the scope of the computer-readable medium 900 disclosed herein. In some examples, the computer-readable medium 900 is a non-transitory computer-readable medium, in which the term "non-transitory" does not encompass transitory propagating signals.

The computer-readable medium 900 may have stored thereon computer-readable instructions 902-906 that a processor, such as the processor 604 of the system 602 depicted in FIGS. 6 and 7 may execute. The computer-readable medium 900 may be an electronic, magnetic, optical, or other physical storage device that contains or stores executable instructions. The computer-readable medium 900 may be, for example, Random Access memory (RAM), an Electrically Erasable Programmable Read-Only Memory (EEPROM), a storage device, or an optical disc.

The processor may execute the instructions 902 to generate a sequence of characters 618 to be used in pre-pairing a first device 620 with a second device 630 The processor may execute the instructions 904 to execute a pre-pairing operation using the generated sequence of characters 618. The processor may execute the pre-pairing operation while the first device 620 and the second device are connected to the system 602 through respective wired connections 614, 616.

The processor may execute the instructions 906 to store the generated sequence of characters 618 in a first permanent memory partition 628 of the first device 620 and a second permanent memory partition 638 of the second device 630. According to examples, the first device 620 is to wirelessly connect with the second device 630 using the generated sequence of characters 618 stored in the first permanent memory partition 628 and the second permanent memory partition 630 at a later time following disconnection of the first device 620 and the second device 630 from the system 602.

According to examples, following the disconnection of the first device 620 from the second device 630 and the erasure of the data from the first dynamic memory partition 626 and the second dynamic memory partition 636, the first device 620 and the second device 630 may be delivered to an end user. The end user may remove the first device 620 and the second device 630 from their packaging and may activate them. For instance, the end user may plug the first device 620 into a power source, such as a power outlet or a port on a television.

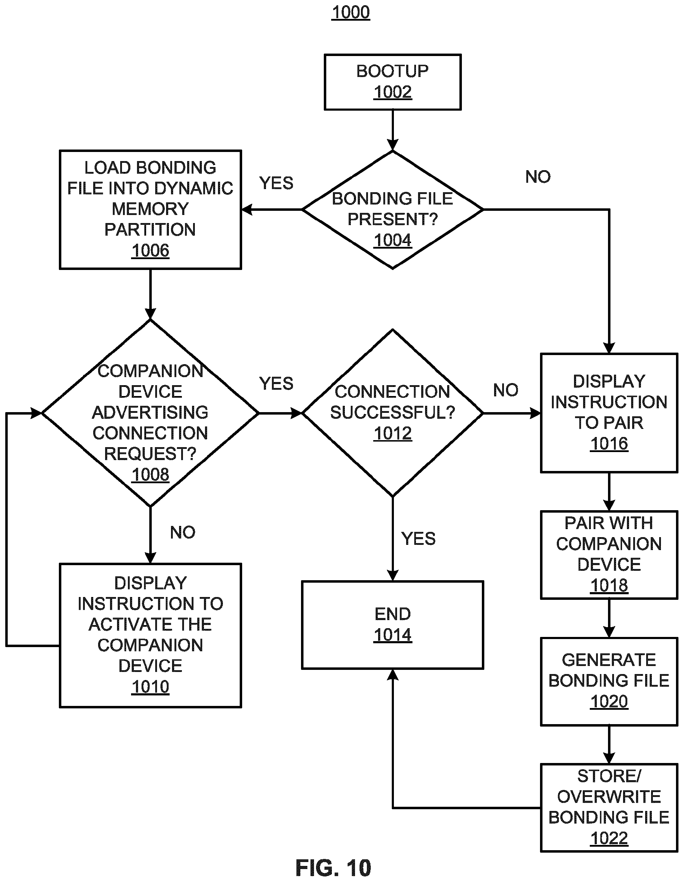

With reference now to Figure 10, there is illustrated a flow diagram of a method that the first device 620 may follow after the first device 620, e.g., a main device, after the first device 620 undergoes a factory reset and attempts to connect with a second device 630, e.g., a companion device, according to an example.

At block 1002, the main device 620 may be booted. The main device 620 may be booted following a factory reset, after being plugged into a television or monitor, or the like.

At block 1004, the main device 620, or a controller (not shown) of the main device 620, may determine whether a bonding file is present in the permanent memory partition 628 of the first data store 624. As discussed herein, the bonding file may include the sequence of characters 618 and information pertaining to the second device 630 that the processor 604 may use to connect the main device 620 with the companion device 630. The sequence of characters 618 and the information pertaining to the second device 630 may have been stored in the permanent memory partition 628 during execution of the pre-pairing operation as discussed herein.

At block 1006, based on a determination that the bonding file is present in the permanent memory partition 628, the controller of the main device 620 may load the bonding file into the dynamic memory partition 626. The controller may use the bonding file stored in the dynamic memory partition 626 to wirelessly connect the main device 620 with the companion device 630.

At block 1008, the controller of the main device 620 may determine whether the companion device 630 is wirelessly advertising a connection request. Based on a determination that the companion device 630 is not advertising a connection request, the controller may cause an instruction for a user to activate the companion device 630 to be displayed. The instruction may be for the user to remove a battery tab in the companion device 630 to cause the companion device 630 to be activated. The controller may continue to determine whether the companion device 630 is advertising a connection request at block 1008 until a determination is made that the companion device 630 is advertising a connection request. At block 1012, the controller may determine whether the connection with the companion device 630 is successful. Based on a determination that the connection is successful, the method 1000 may end and additional processes may occur, such as the display of instructions to connect the main device 620 to an available wifi connection.

However, based on a determination that the connection was not successful at block 1012, the controller may, at block 1016 cause an instruction for the end user to follow to pair the main device 620 with the companion device 630. This may include instructions for the end user to press certain buttons and/or perform a sequence of actions on the companion device 630 to cause the main device 620 to pair with the companion device 630.

At block 1018, the main device 620 may become connected with the companion device 630 through actions taken by the end user. The connection process may involve the generation of a new sequence of characters and the exchange of information between the main device 620 and the companion device 630. At block 1020, the controller may generate a bonding file that includes the new sequence of characters and identifying information of the companion device 630. The controller may also, at block 1022, store the bonding file with this information in the first data store 624, which may involve overwriting an existing bonding file stored in the first data store 624. The controller may store the bonding file in the permanent memory partition 628 of the first data store 624.

In the foregoing description, various inventive examples are described, including devices, systems, methods, and the like. For the purposes of explanation, specific details are set forth in order to provide a thorough understanding of examples of the disclosure. However, it will be apparent that various examples may be practiced without these specific details. For example, devices, systems, structures, assemblies, methods, and other components may be shown as components in block diagram form in order not to obscure the examples in unnecessary detail. In other instances, well-known devices, processes, systems, structures, and techniques may be shown without necessary detail in order to avoid obscuring the examples.

The figures and description are not intended to be restrictive. The terms and expressions that have been employed in this disclosure are used as terms of description and not of limitation, and there is no intention in the use of such terms and expressions of excluding any equivalents of the features shown and described or portions thereof. The word "example" is used herein to mean "serving as an example, instance, or illustration." Any embodiment or design described herein as "example' is not necessarily to be construed as preferred or advantageous over other embodiments or designs.

According to examples, a system may include a processor and a memory on which is stored machine-readable instructions that when executed by the processor, cause the processor to: generate a sequence of characters to be used in pre-pairing a first device with a second device, cause the first device to be pre-paired with the second device using the generated sequence of characters, in which the first device includes a first data store and the second device includes a second data store, and store the generated sequence of characters in the first data store of the first device and the second data store of the second device, in which the first device is to wirelessly and automatically connect with the second device using the generated sequence of characters stored in the first data store and the second data store at a later time following disconnection of the first device and the second device from the system. In some examples, the instructions cause the processor to generate a bonding file that includes the generated sequence of characters, determine that an attempt to cause the first device to be pre-paired with the second device was successful, and store the bonding file in a permanent memory partition of the first data store and a permanent memory partition of the second data store.

In some examples, the instructions cause the processor to determine that an attempt to cause the first device to be pre-paired with the second device was unsuccessful and perform at least one further attempt to cause the first device to be pre-paired with the second device. The instructions may cause the processor to determine that a predefined number of attempts to pair the first device with the second device is unsuccessful and output an indication that the first device failed to pre-pair with the second device based on the determination that the predefined number of attempts has failed.

In some examples, the first device and the second device are connected to the system through respective cable connections, and the instructions cause the processor to simulate a wireless pairing of the first device with the second device through the respective cable connections to cause the first device to be pre-paired with the second device.

In some examples, the instructions cause the processor to simulate a Bluetooth wireless pairing of the first device with the second device. The first data store of the first device may include a dynamic memory partition and a permanent data partition, and the instructions may cause the processor to store the generated sequence of characters in the dynamic data partition of the first data store and store the generated sequence of characters in the permanent data partition of the first data store, based on a determination that the pre-pairing of the first device with the second device was successful. In some examples, the generated sequence of characters stored in the dynamic data partition of the first device may be erased without erasing the generated sequence of characters stored in the permanent data partition of the first device.

According to examples, a method may include generating, by a processor of a computing apparatus, a sequence of characters to be used in pre-pairing a first device with a second device, in which the computing apparatus communicates with the first device and the second device through respective wired connections with the first device and the second device. The method may also include, executing, by the processor, a pre-pairing operation using the generated sequence of characters to pre-pair the first device with the second device, in which the first device comprises a first data store and the second device comprises a second data store. The method may still further include storing, by the processor, the generated sequence of characters in the first data store and the second data store, in which the first device is to wirelessly connect with the second device using the generated sequence of characters stored in the first data store and the second data store at a later time following disconnection of the first device and the second device from the computing apparatus.

The method may include simulating a wireless pairing of the first device with the second device through the respective wired connections to cause the first device to be pre-paired with the second device. The method may include simulating a Bluetooth wireless pairing of the first device with the second device. In some examples, the first data store of the first device includes a dynamic memory partition and a permanent data partition, and the method may further include storing the generated sequence of characters in the dynamic data partition of the first data store and storing the generated sequence of characters in the permanent data partition of the first data store.

In some examples, the generated sequence of characters stored in the dynamic data partition of the first device is to be erased without erasing the generated sequence of characters stored in the permanent data partition of the first device. The method may further include generating a bonding file that includes the generated sequence of characters, determining whether the execution of the pre-pairing operation to pre-pair the first device with the second device was successful, and storing the bonding file in a permanent memory partition of the first data store and a permanent memory partition of the second data store, based on a determination that the pre-pairing of the first device with the second device was successful.

According to examples, a device may include a data store having a dynamic memory partition and a permanent memory partition, and a controller to determine whether a bonding file with a companion device is present in the permanent memory partition, in which the bonding file was generated through a pre-pairing operation by a computing apparatus between the device and the companion device. The controller may also load the bonding file from the permanent memory partition into the dynamic memory partition based on a determination that the bonding file is stored in the permanent memory partition and cause the device to wirelessly pair with the companion device using the bonding file stored in the dynamic memory partition.

The controller may determine whether the companion device is advertising a connection request, cause an instruction for a user to activate the companion device to be displayed based on a determination that the companion device is not advertising a connection request, and determine whether a connection with the companion device is successful. The controller may cause an instruction to connect the companion device with the device to be displayed and connect the device with the companion device following actions performed by an end user according to the instruction. The controller may further generate a new bonding file and store the generated bonding file in a permanent memory partition of the data store.

According to examples, a non-transitory computer-readable medium may have stored thereon machine-readable instructions that when executed by a processor of a computing apparatus, cause the processor to generate a sequence of characters to be used in pre-pairing a first device with a second device that are in wired connection with the computing apparatus, execute a pre-pairing operation using the generated sequence of characters to pre-pair the first device with the second device, in which the first device includes a first data store and the second device comprises a second data store. The instructions may also cause the processor to store the generated sequence of characters in the first data store and the second data store, in which the first device is to wirelessly connect with the second device using the generated sequence of characters stored in the first data store and the second data store at a later time following disconnection of the first device and the second device from the computing apparatus.

The instructions may further cause the processor to simulate a wireless pairing of the first device with the second device through respective wired connections with the computing apparatus to cause the first device to be pre-paired with the second device.

In the foregoing description, various inventive examples are described, including devices, systems, methods, and the like. For the purposes of explanation, specific details are set forth in order to provide a thorough understanding of examples of the disclosure. However, it will be apparent that various examples may be practiced without these specific details. For example, devices, systems, structures, assemblies, methods, and other components may be shown as components in block diagram form in order not to obscure the examples in unnecessary detail. In other instances, well-known devices, processes, systems, structures, and techniques may be shown without necessary detail in order to avoid obscuring the examples.

The figures and description are not intended to be restrictive. The terms and expressions that have been employed in this disclosure are used as terms of description and not of limitation, and there is no intention in the use of such terms and expressions of excluding any equivalents of the features shown and described or portions thereof. The word "example" is used herein to mean "serving as an example, instance, or illustration." Any embodiment or design described herein as "example' is not necessarily to be construed as preferred or advantageous over other embodiments or designs.

Although the methods and systems as described herein may be directed mainly to digital content, such as videos or interactive media, it should be appreciated that the methods and systems as described herein may be used for other types of content or scenarios as well. Other applications or uses of the methods and systems as described herein may also include social networking, marketing, content-based recommendation engines, and/or other types of knowledge or data-driven systems.

**Claims**

1. A wearable device, comprising:

    a frame;

a corrective lens mounted to the frame, wherein the corrective lens includes a diffractive surface having features structured to have a certain correction level; and

at least one optical component mounted to the frame, the at least one optical component being positioned immediately adjacent to the corrective lens, wherein the diffractive surface of the corrective lens causes the corrective lens to have a sufficiently thin edge to prevent the edge of the corrective lens from occluding the at least one optical component.

**2.** The wearable device of claim 1, wherein the diffractive surface comprises a kinoform surface.

**3.** The wearable device of claim 1 or 2, wherein the diffractive surface comprises an aspherical shaped kinoform surface to correct astigmatism in a user's eye.

**4.** The wearable device of any preceding claim, wherein the edge of the corrective lens comprises a common thickness for features having structures designed for multiple levels of vision impairments.

**5.** The wearable device of any preceding claim, wherein the at least one optical component comprises a camera configured to track movements of a user's eye when the user is wearing the wearable device.

**6.** The wearable device of any preceding claim, wherein the at least one optical component comprises a light source configured to emit light onto a user's eye when the user is wearing the wearable device.

**7.** The wearable device of any of claims 1 to 4, wherein the at least one optical component comprises an eye tracking system, the eye tracking system including:

a camera configured to track movements of a user's eye when the user is wearing the wearable device; and
a light source configured to emit light onto the user's eye when the user is wearing the wearable device, wherein the camera is to capture images of the user's eye while the light is emitted onto the user's eye.

**8.** The wearable device of any preceding claim, further comprising a display apparatus positioned adjacent to the corrective lens.

**9.** The wearable device of claim 8, wherein the display apparatus is configured to display virtual reality, augmented reality, and/or mixed reality images.

**10.** The wearable device of any preceding claim, further comprising a temple arm hingedly connected to the frame.

**11.** The wearable device of any preceding claim, wherein the diffractive surface is provided on a first side of the prescription lens.

**12.** The wearable device of claim 11, wherein the corrective lens comprises a second feature on a second side of the corrective lens.

<u>100</u>

**FIG. 1**

<u>200</u>

**FIG. 2**

EYE TRACKING
SYSTEM
300

EYE
120

**FIG. 3**

FIG. 4

BOTTOM SIDE
506

FRONT
SIDE
508

500

CHASSIS
502

HEAD
STRAP
504

LEFT SIDE
510

FIG. 5

EP 4 425 236 A1

600

SYSTEM
602

PROCESSOR
604

MEMORY
606

FIRST
INTERFACE
610

DATA STORE
608

SEQUENCE OF
CHARACTERS
618

SECOND
INTERFACE
612

FIRST
DEVICE
620

614

616

SECOND
DEVICE
630

FIRST DEVICE
INTERFACE
622

FIRST DATA STORE
624

DYNAMIC MEMORY
PARTITION
626

PERMANENT
MEMORY PARTITION
628

WIRELESS
COMMUNICATION
COMPONENTS
629

SECOND DEVICE
INTERFACE
632

SECOND DATA STORE
634

DYNAMIC MEMORY
PARTITION
636

PERMANENT
MEMORY PARTITION
638

WIRELESS
COMMUNICATION
COMPONENTS
639

**FIG. 6**

SYSTEM
602

MEMORY
606

GENERATE A SEQUENCE OF
CHARACTERS
700

CAUSE A FIRST DEVICE TO BE PRE-
PAIRED WITH A SECOND DEVICE
702

STORE THE GENERATED SEQUENCE OF
CHARACTERS IN DATA STORES OF THE
FIRST DEVICE AND THE SECOND DEVICE
704

PROCESSOR
604

SEQUENCE OF
CHARACTERS
618

DATA
STORE
608

FIG. 7

800

```
┌─────────────────────────────┐
│   GENERATE A SEQUENCE OF     │
│        CHARACTERS            │
│            802               │
└─────────────────────────────┘
              │
              ▼
┌─────────────────────────────┐
│   EXECUTE A PRE-PAIRING      │◄──────────────┐
│        OPERATION            │                │
│            804               │            YES │
└─────────────────────────────┘                │
              │                                 │
              ▼                                 │
         ╱─────────╲          NO          ╱─────────╲
        ╱ PRE-PAIRING ╲──────────────────▶╱  RETRY?  ╲
        ╲ SUCCESSFUL? ╱                   ╲   810    ╱
         ╲   806    ╱                      ╲────────╱
          ╲───────╱                            │
              │                                │ NO
          YES │                                ▼
              ▼                    ┌───────────────────────┐
┌─────────────────────────┐       │   OUTPUT FAILURE       │
│   STORE THE GENERATED   │       │   NOTIFICATION         │
│ SEQUENCE OF CHARACTERS  │       │       812              │
│         808             │       └───────────────────────┘
└─────────────────────────┘
```

FIG. 8

COMPUTER-READABLE MEDIUM
900

GENERATE A SEQUENCE OF CHARACTERS
902

EXECUTE A PRE-PAIRING OPERATION
904

STORE THE GENERATED SEQUENCE OF
CHARACTERS
906

**FIG. 9**

<u>1000</u>

```
        ┌─────────────┐
        │   BOOTUP    │
        │    1002     │
        └─────────────┘
```

FIG. 10

Europäisches
Patentamt

European
Patent Office

Office européen
des brevets

# EUROPEAN SEARCH REPORT

Application Number

EP 24 16 0532

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/132888 A1 (PERREAULT JOHN D [US] ET AL) 30 April 2020 (2020-04-30) | 1,2,4-12 | INV. G02B27/00 |
| A | * paragraphs [0018], [0029], [0030]; figures 2, 13, 14 * | 3 | G02B27/01 |
| | ----- | | ADD. |
| X | US 2021/311356 A1 (HADDAD YARIV [IL] ET AL) 7 October 2021 (2021-10-07) | 1 | G02B3/08 |
| A | * paragraphs [0013], [0019], [0021], [0024]; figure 1B * | 2-12 | |
| | ----- | | |
| X | US 10 578 869 B2 (MENTOR ACQUISITION ONE LLC [US]) 3 March 2020 (2020-03-03) | 1,3 | |
| A | * Column 9, lines 26 - 37; Column 130, lines 4 -12 and lines 40 - 43;; figures 1, 117 * | 2,4-12 | |
| | ----- | | |
| A | CA 2 973 102 A1 (X DEV LLC [US]) 21 July 2016 (2016-07-21) * the whole document * | 1-12 | |
| | ----- | | |
| A | US 10 133 076 B2 (FACEBOOK TECH LLC [US]) 20 November 2018 (2018-11-20) * the whole document * | 1-12 | **TECHNICAL FIELDS SEARCHED (IPC)** G02B |
| | ----- | | |

The present search report has been drawn up for all claims

| Place of search | Date of completion of the search | Examiner |
|---|---|---|
| Munich | 17 July 2024 | Toccafondo, Iacopo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 0532

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2024

| Patent document cited in search report | | Publication date | Patent family member(s) | | Publication date |
|---|---|---|---|---|---|
| US 2020132888 | A1 | 30-04-2020 | CN | 112236709 A | 15-01-2021 |
| | | | EP | 3871033 A1 | 01-09-2021 |
| | | | US | 2020132888 A1 | 30-04-2020 |
| | | | WO | 2020086207 A1 | 30-04-2020 |
| US 2021311356 | A1 | 07-10-2021 | NONE | | |
| US 10578869 | B2 | 03-03-2020 | US | 2019025588 A1 | 24-01-2019 |
| | | | US | 2020201050 A1 | 25-06-2020 |
| | | | US | 2021349318 A1 | 11-11-2021 |
| | | | US | 2023130723 A1 | 27-04-2023 |
| CA 2973102 | A1 | 21-07-2016 | CA | 2973102 A1 | 21-07-2016 |
| | | | CN | 107209381 A | 26-09-2017 |
| | | | EP | 3245552 A1 | 22-11-2017 |
| | | | KR | 20170102543 A | 11-09-2017 |
| | | | US | 2016198949 A1 | 14-07-2016 |
| | | | WO | 2016115128 A1 | 21-07-2016 |
| US 10133076 | B2 | 20-11-2018 | NONE | | |

EPO FORM P0459

For more details about this annex : see Official Journal of the European Patent Office, No. 12/82